# EUROPEAN PATENT SPECIFICATION

(11) **EP 4 373 748 B1**
(45) Date of publication and mention of the grant of the patent: **18.06.2025**
(21) Application number: 22730447.4
(22) Date of filing: 24.05.2022
(51) Int. Cl.: B64F 1/02, E01C 9/00, E01C 5/06

(54) **ENGINEERED MATERIAL ARRESTING SYSTEM**
FLUGZEUGFANGEINRICHTUNG MIT TECHNISCHEM MATERIAL
SYSTÈME D'ARRÊT EN MATÉRIAU D'INGÉNIERIE

(30) Priority: 21.07.2021 NO 20210933
(43) Date of publication of application: 29.05.2024
(73) Proprietor: Runway Safe IPR AB, 411 36 Göteborg (SE)
(72) Inventor: BARSOTTI, Matt, Austin, Texas TX 78739 (US); HADJIOANNOU, Michalis, Austin, Texas TX 78736 (US); HELGESEN, Kjell Håkon, 1185 Oslo (NO); NARMO, Jon A., 2317 Hamar (NO)
(74) Representative: AWA Sweden AB
(86) International application number: PCT/EP2022/064042
(87) International publication number: WO 2023/001432

(56) References cited:
- EP-A1- 3 297 920
- DE-A1- 10 041 492
- US-A- 3 967 704
- US-A- 5 193 764
- US-A- 5 885 025

## Description

This invention relates to Engineered Material Arresting Systems (EMAS) beds for decelerating and steering vehicles/aircrafts unable to stop on their own. More precisely, the invention relates to EMAS-beds having a course directing effect on vehicles entering the bed.

### Background

A runway overrun is a landing accident with potentially fatal consequences caused by an aircraft being unable to stop before it reaches the end of the runway. Typical causes for runway overruns are pilot errors, poor weather, and/or a technical fault with the aircraft.

Engineered Materials Arresting Systems (EMAS) are systems installed at the ends of runways to help arrest aircraft that fail to stop before reaching the end of the runway. EMAS design typically involves optimizing the bed geometry to provide the best overall fleet performance. Fleet optimization requires compromises and results in sub-optimal performance for some of the aircraft. Shallow beds and softer materials improve the arresting performance for smaller aircraft, but large aircraft require the opposite traits. Consequently, there is significant motivation to develop EMAS concepts that can improve the performance for mixed fleets of large and small aircraft. Because most airports serve a wide range of aircraft, EMAS should advantageously be designed to stop planes of very different sizes, ranging from as little as 12 metric tons up to 450 metric tons. Aircraft may have very different tire sizes, ranging from less than 50 cm to above 145 cm in diameter. EMAS are specifically designed for the typical fleet of aircraft serviced by a particular airport, and they are tailored to the available space beyond the end of the runway.

### Prior art

EMAS typically consist of large shallow beds of absorbent material that engage an aircraft's tires and absorbs the aircraft's kinetic energy to bring it to a controlled stop. Commercially available EMAS use different types of construction, but the principal absorbing materials are typically cementitious foam block or glass foam aggregate.

US 3,967,704 describes a safety device for quickly arresting the movement of vehicles such as aeroplanes and motor cars by forming a retarding bed of crushable material adjacent to a vehicle track. A foam is formed from an amino plastic resin composition and laid down in a bed adjacent to the vehicle track where it is cured in situ to produce a non-resilient cured foam body having a compressive strength between 15 and 50 p.s.i. (0.10 to 0.34 MPa) and a density from 0.25 to 10 pounds per cubic foot (4 to 160 kg/m³). The document describes an example embodiment of the bed having uniform thickness in a central position and sloping sides to provide a centralising effect on aircraft using it.

US 5,885,025 describes vehicle arresting assembled of a large number of blocks of cellular concrete having predetermined compressive gradient strength, so that aircraft landing gear is subjected to drag forces effective to slow a variety of types of aircraft, while providing deceleration within a safe range of values. An arresting bed typically includes an entry region of a depth increasing from 9 to 24 inches (23 to 61 cm) formed of blocks having a first compressive gradient strength. A second region, which may be tapered into the first region and increase in depth to 30 inches (76) cm, is formed of blocks having a greater compressive gradient strength. An aircraft thus experiences increasing drag forces while it travels through the bed, to provide an arresting capability suitable for a variety of aircraft. A protective hard coat layer of cellular concrete of strength greater than the blocks overlays the blocks to enable service personnel to walk on the bed without damage. Arresting bed systems may be provided in alternative configurations, such as a bed formed of an aggregate including pieces of cellular concrete with or without interspersed pieces of other compressible material and covered by a hard coat layer. The document discloses further an example embodiment having blocks cellular cement in a first lateral row with a lower compressive gradient strength than blocks in the following lateral rows to increase the retardation effect on the aircraft in longitudinal direction.

US 10,458,073 B2 discloses systems and methods for arresting aircraft. In specific embodiments, the systems and methods can be useful in arresting light aircraft because they typically do not have the weight to penetrate available EMAS systems. The system is generally provided as a structure having a suspended layer of energy absorbing material. A lower portion of the system can have a lower strength, used as a method to suspend an upper, stronger/more highly energy absorbent portion of the system.

The concept of using prefabricated blocks of foam glass material has been explored by the US Transportation Research Board and documented in ACRP Report 29 [1]. Glass foam block material was determined to have many desirable EMAS characteristics, include a nearly ideal compaction stress-strain curve, chemical inertness, low strain rate dependency, and environmental durability, and inflammability. The report described design concepts involving glass foam arranged either in prefabricated blocks or built-up on-site at a runway. Block concepts would involve joints and seams between blocks, while a built-up approach could be constructed to provide a continuous surface. Because glass foam is typically manufactured in relatively small block or board geometries, the report envisioned that smaller boards would be glued together to create larger blocks or built up in layers to create a monolithic bed.

**ACRP** Report 29 also describes a prefabricated block having a depth-varying by multiple layers of compactible foam material having different compressive strengths are glued together such that softer layers would be placed near the surface of the bed, while firmer layers would be placed near the bottom. This concept was intended to help improve the performance of arrestor-beds with mixed aircraft fleets. Lighter aircraft would engage primarily with softer layers of compactible foam near the surface, while heavier aircraft would penetrate more deeply and engage with firmer layers of foam near the bottom. The report described modeling and simulation results that showed improved mixed fleet performance compared with EMAS that have a single strength of material throughout the thickness.

The depth-varying concept was originally proposed in ACRP Report 29 as being comprised of multiple layers or strata of compactible foam adhered to another to achieve the full EMAS bed thickness. The layers at the bottom of the block would have the highest density and crush strength, while the layer at the top would have the lowest density and crush strength. The depth-varying properties of the bed would provide improved mixed-fleet arresting performance by allowing light aircraft to engage the soft upper layers, while heavy aircraft would penetrate more deeply and engage the firmer lower layers of material.

From US 2012/5247298 it is known macro-patterned materials and methods of their use in connection with vehicle arresting systems. Certain embodiments provide 3-D folded materials, honeycombs, lattice structures, and other periodic cellular material structures, that can be used for arresting vehicles. The materials can be engineered to have properties that allow them to reliably crush in a predictable manner under pressure from a vehicle. The materials can be formed into various shapes and combined in various ways in order to provide the desired properties.

Aircraft overruns are emergency situations in which one or more things have gone wrong. When an overrun occurs, aircraft often do not exit along the centerline of the runway, but instead may be offset to the left or right. Aircraft also may not travel in a parallel direction to the runway, but instead may veer along a diagonal line of travel. Additionally, the typical design of runways involves a shallow side slope to facilitate water drainage, which may increase veering behavior in some situations. When aircraft veer diagonally, it can result in the aircraft taking a shorter path through an EMAS arrestor-bed. This results in a premature exit along the lateral edge of the bed, thereby shortening the length of travel through the bed and reducing the protection the EMAS was designed to provide. EMAS presently have no design features to control the path of aircraft travel, and innovations that could provide a centering effect are desirable.

US 5 193 764 A discloses a system for arresting movement of an aircraft travelling off the end of a runway at high speeds. A panel is formed by connecting rigid, friable, fire resistant foam boards, and a plurality of layers comprised of stacked panels are adhered to a base surface.

### Objective of the invention

The main objective of the invention is the provision of Engineered Material Arresting Systems (EMAS) beds for decelerating and steering vehicles/aircrafts unable to stop on their own.

### Description of the invention

An arrestor-bed is a bed of a compactible foam material laid over a stretch of ground or felled into the ground like e.g. a basin filled with the compactible foam material. The arrestor-bed is in some embodiments laid at the end of a runway but may be laid/applied at any location where a vehicle/aircraft may be expected to become (involuntary) in need for external assistance to make a controlled stop. Arrestor-beds are typically either made of an aggregate of particulate compactible material filling a basin laid onto or in the soil/underground, or prefabricated blocks of compactible material assembled on site to form a bed on a soil/underground. The present invention relates to the latter, arrestor-beds made by assembling and adhering together the prefabricated blocks. The adhering of the prefabricated blocks to each other may be obtained by e.g. gluing, caulking, adhesive tape, etc.

The present invention is based on the realisation that an observed weakness of the joints between the prefabricated blocks, which typically have a lower shear strength than the continuous areas of the prefabricated blocks, may be utilised to give the arrestor-bed a directional loading assisting in centralising the travel path of a vehicle passing through the arrestor-bed. I.e., by angling the orientation of the prefabricated blocks instead of arranging them in a right-angle grid typically of prior art, the retardation forces induced on the wheels of the vehicle will have a lateral component providing the effect of assisting the vehicle to travel along the longitudinal centre axis of the arrestor-bed.

Thus, in a first aspect, the invention relates to a vehicle arresting system comprising an arrestor-bed laid onto a base/ground and having longitudinal centre axis extending from a front end to a back end opposite the front end, wherein the arrestor-bed comprises:
a plurality of prefabricated blocks of a compactible foam material assembled and adhered together side-by-side,
   characterised in that
the assembly of prefabricated blocks comprises an even numbered set of linear lanes 11 of prefabricated blocks 10, half of the set is located on a left side and half of the set is located on a right side of the longitudinal centre axis of the arrestor-bed, and where each linear lane 11 of prefabricated blocks 10 are angled with an angle a, where 0° < α ≤ 30°, towards the longitudinal centre axis of the arrestor-bed 1 such that the set of linear lanes 11, as seen from above, forms a series of consecutive inverted V-patterns along the longitudinal centre axis of the arrestor-bed, and
the prefabricated blocks are shaped and dimensioned such that they totally cover/tesselate a surface area of the base/ground on which the arrestor-bed is laid onto.

The term "longitudinal" as used herein refers to the direction at which a vehicle/- aircraft entering the arrestor-bed is expected to travel across the arrestor-bed. The term "front end" as used herein is the side at which the vehicle/aircraft is expected to enter the arrestor-bed/EMAS and the "back side" is the side opposite the front end. The arrestor-bed may in some embodiments be shaped into a longitudinal rectangular bed (as seen from above), i.e. having a relatively short width as compared to its length. oblique

The term "arrestor-bed" as used herein refers to a bed of a compactible foam material laid over a stretch of ground or felled into the ground like e.g. a basin filled with the compactible foam material. The arrestor-bed is in some embodiments laid at the end of a runway but may be laid/applied at any location where a vehicle/aircraft may be expected to become (involuntary) in need for external assistance to make a controlled stop. However, even though the arrestor-bed will hereafter is described in relation to airfields and the need for averting aircraft overrun accidents, the arrestor-bed according to the invention is not confined to aviation/airfields but may be applied for absorbing the kinetic energy and stop any wheeled vehicle crossing the arrestor-bed at any location wherever such functionality may be wanted. The arrestor-bed may in the literature also be denoted as an "Engineered Material Arresting System, EMAS." These terms are used interchangeably herein.

The invention according to the first aspect is not tied to any particular design, size or location, but encompasses any size and design of arrestor-beds known or conceivable to the person skilled in the art. Furthermore, the present invention is not reliant on how the arrestor-bed is made or assembled. Any known and conceivable way of forming a bed of prefabricated blocks of a compactible foam material on a location where an arrestor-bed is to be located is included in the present invention as long as the arrestor-bed has angled linear lines of prefabricated blocks forming a consecutive series of inverted V-patterns along the longitudinal centre axis relative to a direction from the front end to the back end of the arrestor-bed.

The term "compactible foam material" as used herein encompasses any material known to the person skilled in the art for being suitable as a deformable/collapsible material that engages an incoming wheel of a vehicle/aircraft and absorbs kinetic energy from the vehicle/aircraft to bring it to a controlled stop. Examples of suited materials include, but is not limited to, cellular cement, cellular cementitious material, foam cement, polymeric foam, honeycomb, metal honeycomb, vermiculite, perlite, ceramic foams, foam glass and other isotropic or anisotropic compactible/- deformable materials, or combinations thereof.

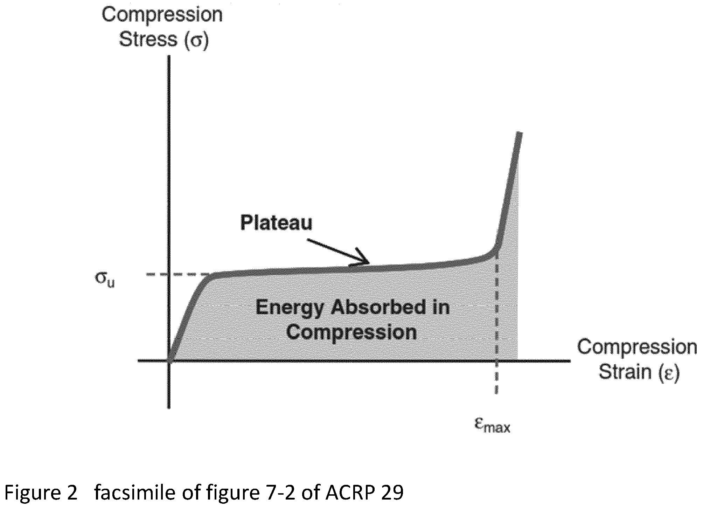

When a compactible foam material is subject to a stress load, it will sustain the stress load up to a certain plateau value, _{Gu}, at which the foam material starts to become crushed/compressed. The foam material will be progressively compacted during the plateau stress until all or almost all void spaces of the foam microstructure are collapsed. At this point, the material hardens significantly, and further compaction requires dramatically higher stresses/compression forces. A typical compression stress-strain curve for a compactible foam material is shown in figure 2. The degree of compaction at the end of the plateau will be referred to as the maximum compressive strain, _{£max}, of the material, and is essential in determining the overall energy absorption potential of the compactible foam material because energy absorption relates to the area under the stress-strain curve. Greater maximum compression strain values correspond to long plateau regions in the load curve and high energy absorption. The term "compressive strength" as used herein refers to the plateau value, _{Gu}, as determined by ASTM Cl65-07 (2017) unless stated otherwise.

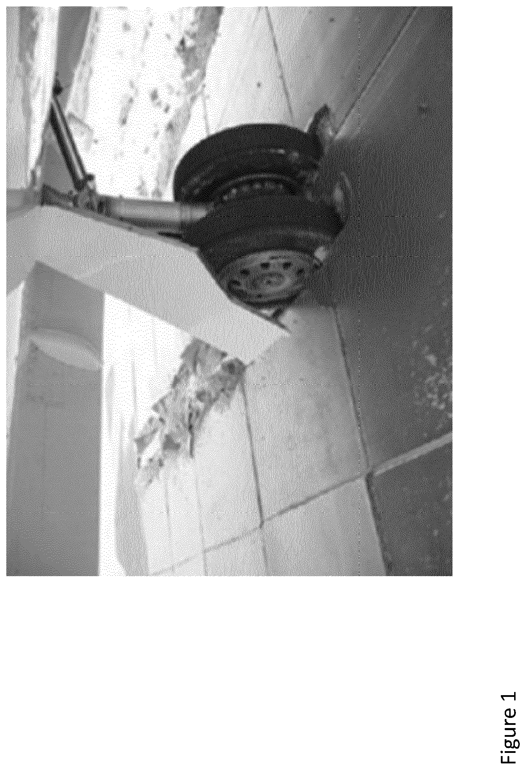

The compactible foam material of an arrestor-bed has a tailored mechanical strength such that the arrestor-bed is unable to carry the wheel(s) of a vehicle/aircraft entering the arrestor-bed, but sinks some distance into the compactible foam material such that the compactible foam material absorbs kinetic energy from the vehicle/aircraft and brings it to a forced stop, such as shown in the photograph of figure 1. The compressive strength of compactible foam materials which provide an effective but controlled stopping action on vehicles/aircrafts depends heavily on the expected tire pressure pressing onto the surface of the arrestor-bed by the wheels of the vehicle/aircraft entering the arrestor bed. Since the mass of vehicles/aircrafts may vary greatly, so does the range of compressive strength which provides an effective stopping action. It is therefore necessary to adapt the compressive strength of the compactible foam material of the arrestor bed according to which vehicles/- aircrafts are intended to be stopped by it. However, the determination of the required compressive strength is within the normal skills of a person skilled in the art and may be made by experimental material testing and/or numerical modelling as described in ACRP Report 29 [1], see e.g. chapters 8 and 9. In practice, when applying the vehicle arresting system on an airfield with passenger traffic, the compressive strength of the compactible foam material may advantageously be in the range from 6.9 to 689.8 kPa (1 to 100 psi), preferably from 68.9 to 620.5 kPa (10 to 90 psi), more preferably from 137.9 to 551.8 kPa (20 to 80 psi), more preferably from 206.8 to 482.6 kPa (30 to 70 psi), and most preferably from 275.8 to 413.7 kPa (40 to 60 psi).

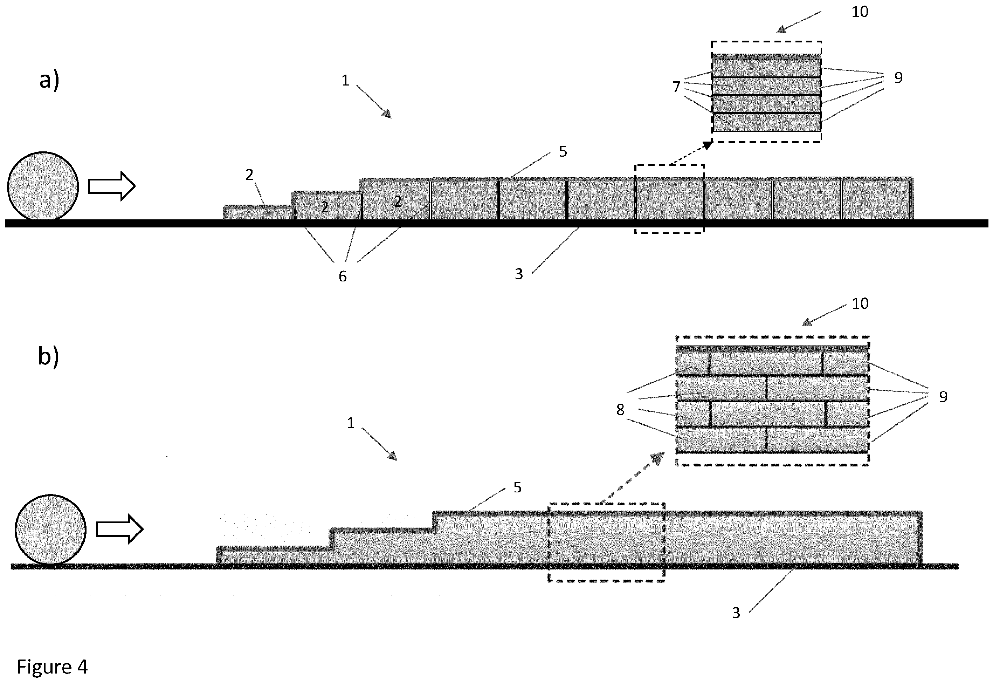

In some embodiments, each prefabricated block may be made of a plurality of smaller blocks 7 adhered together in a vertical stack by e.g. gluing. This will give the prefabricated blocks a stratified layered structure. This way of assembling prefabricated blocks to an arrestor-bed is sometimes denoted as the block-method. An example of such assembly to make an EMAS is shown schematically in figure 4a). The figure is a drawing schematically illustrating an arrestor-bed 1 made up of a plurality of rows 2, each made up of several prefabricated blocks 10 of a compactible energy absorbing material placed side by side. As seen from the detailed blown-up drawing, each prefabricated block 10 in the bulk part of the arrestor-bed is made up of a plurality, here four, layers 9 of smaller blocks 7 stacked and adhered together on top of each other. In this embodiment, the tapering-off at the front end and/or at the sides of the arrestor-bed may be obtained by simply applying a smaller number of smaller blocks in the stack for the first rows of the arrestor-bed and/or at the ends of each row.

In some embodiments, the blocks may have a stratified layered structure where each layer is made of smaller blocks 8 and where the small blocks each layer is offset relative to the layer beneath it such that the smaller blocks 8 form a brick pattern, such as shown in figure 4b). I.e., the prefabricated blocks comprises a vertical stack of a plurality of stratified layers 9 adhered to each other and where each stratified layer 9 consists of a second plurality of smaller blocks 8 arranged in a single horizontal plane and where the smaller blocks 8 of a stratified layer 9 are offset relative to plurality of smaller blocks 8 of the stratified layer 9 beneath and/or above it from a bottom layer to a top layer such that the smaller blocks 8 of the prefabricated block form a brick pattern. Such a construction will obtain an arrestor-bed with more monolithic mechanical properties.

In some embodiments, the arrestor-bed may comprise a covering layer on top of the compactible energy absorbing material to protect it from the environment, jet blast, and so on. The invention may apply any known and conceivable covering layer known to the skilled person as suited for arrestor-beds made of a foamed/- compactible energy adsorbing material. Examples of suitable covering layers include thin plastic tops, cement board tops, polymer coatings or sealants, paint, or a combination thereof. The example embodiments shown in figures 4a) and 4b) comprise a covering layer 5.

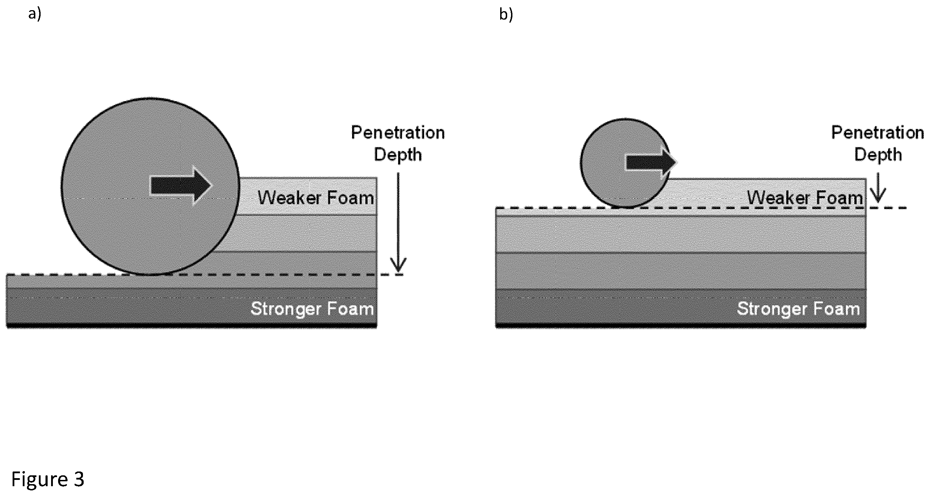

The arrestor-bed may in some embodiments have a depth-variation in the compressive strength with increasing compressive strength with increased depth of the bed. This provides the arrestor-bed with improved performance with mixed vehicle/aircraft since the wheels of the lighter vehicles will only engage the upper softer layer(s) while the wheels of a heavier vehicle/aircraft will engage deeper into to the arrestor-bed as illustrated schematically in figures 3a) and 3b). In embodiments where the prefabricated blocks 10 have a stratified structure, the depth-variation in the compressive strength may be obtained by simply gluing together smaller blocks 7, 8 with gradually stronger compressive strength at lower depths such that the bottom layer has the highest compressive strength and the top the weakest each successive layer has a weaker compressive strength than the small block below it. An example of such embodiment is shown in figures 3a) and 3b).

In example embodiments with a stratified structure with depth-variation of the compressive strength, the upper layer will produce a softer material response under a vehicle/aircraft tire loading than solid compactible energy absorbing material, thereby acting similar to a lower density compactible energy absorbing material with a lower compaction strength. The lower strata will produce a firmer material response under aircraft tire loading; in the limit, this strength will approach that of the solid compactible energy absorbing material. The lowest layer may be a continuous compactible energy absorbing material with no voids at all. In an example embodiment, the one or the second plurality of smaller blocks 7, 8 of the top layer 9 of the stratified prefabricated block 10 has/have a first compressive strength, the one or the second plurality of smaller blocks 7, 8 of the first stratified layer 9 below the top layer has/have a second compressive strength, the one or the second plurality of smaller blocks 7, 8 of the second stratified layer 9 below the top layer has/have a third compressive strength, and so until the bottom stratified layer 9, and where the first compressive strength< the second compressive strength< the third compressive strength and so on until the bottom stratified layer 9.

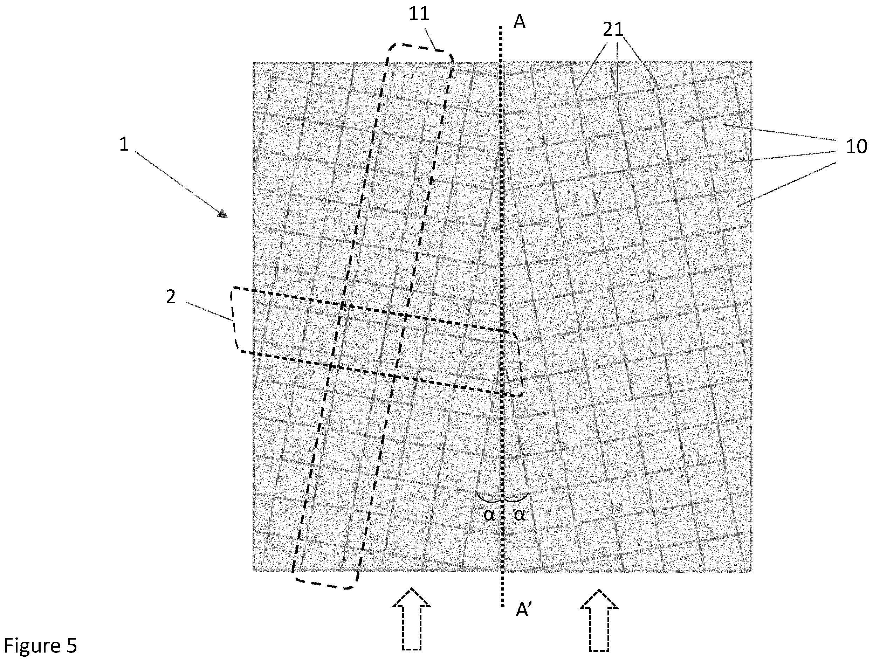

It is evident from the context that the angle a towards the longitudinal centre axis of the arrestor-bed is an angle formed in a horizontal plane such that the inclination of the linear lanes causes a lateral force on a vertically oriented wheel travelling in a longitudinal direction through the arrestor-bed. Thus, as used herein, the term "angle a" relates to the angle at which the linear lanes of prefabricated blocks are angled in the horizontal plane towards the longitudinal centre axis of the arrestor-bed in the direction of travel as illustrated schematically in figure 5. The figure is a drawing showing an example embodiment of an arrestor-bed 1 assembled by prefabricated blocks 10 arranged in a set of linear lanes or columns indicated in the drawing by their longitudinal sides 21. The figure also indicates one linear lane 11 of prefabricated blocks 10 by the stapled square marked with reference number 11, and the direction of one row 2 by the stapled square marked with reference number 2. The arrestor-bed has a front end which a vehicle/aircraft to be stopped will arrive and enter the arrestor-bed in the travel direction indicated by the two stapled arrows. As seen on the figure, the tilting of the linear lanes is such that they lean towards the longitudinal centre axis, indicated by the stapled line marked with A-A', from both sides of the axis.

In some embodiments, the set of linear lanes of prefabricated blocks may be angled with an angle a, where 0° < α ≤ 28°, preferably 1 ≤ α ≤ 25°, more preferably 2° ≤ α ≤ 23°, more preferably 3° ≤ α ≤ 20°, more preferably 4° ≤ a ≤ 15°, more preferably 5° ≤ α ≤ 15°, and most preferably 5° ≤ α ≤ 10° towards the longitudinal centre axis of the bed forming an inverted V-pattern relative to a direction from the front end to the back end of the arrestor-bed.

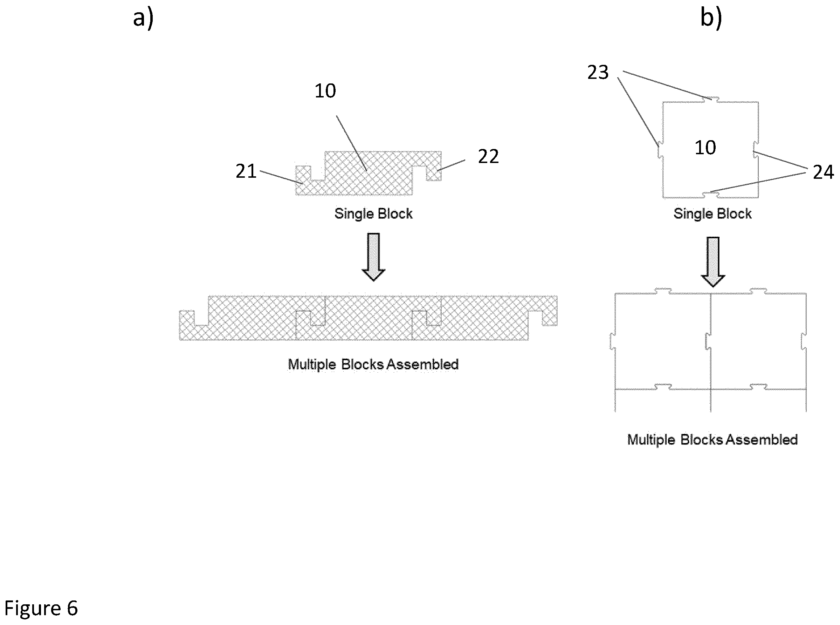

In some embodiments, the prefabricated blocks may be shaped such they interlock with each other when assembled to facilitate assembly at the runway construction site. The prefabricated blocks may feature interlocking geometric features at their edges. The connecting features may be designed to interlock either in the elevation orientation by e.g. a tongue and groove type interlocking mechanism such as illustrated in figure 6a) of be designed to interlock in a plan orientation, by e.g. complementary male and female jigsaw puzzle resembling geometric structures such as shown in figure 6b). Figure 6a) illustrates schematically a single prefabricated block and an assembly of three blocks. The blocks are seen from a lateral side and have a groove type geometric structure 21 and a tongue type geometric structure 22 at the opposite side such that when they are assembled in lanes, the groove of a block interlocks with the tongue of the next block in the lane. Similarly, as seen from figure 6b), which illustrates a single prefabricated block 10 and an assembly of four blocks as seen from above, where the prefabricated block 10 has two male geometric structures 23 and two female geometric structures 24 which interlocks with each other when assembled. The interlocks may be designed with a range of interlock tolerances from one millimeter up to several centimeters, to accommodate the thermal expansion of a large bed comprised of many interlocking blocks. The interlocking features may also provide a smoother arresting force on the aircraft by eliminating gaps between blocks, as such gaps may produce an oscillating speed-bump effect on aircraft tires during arrestment.

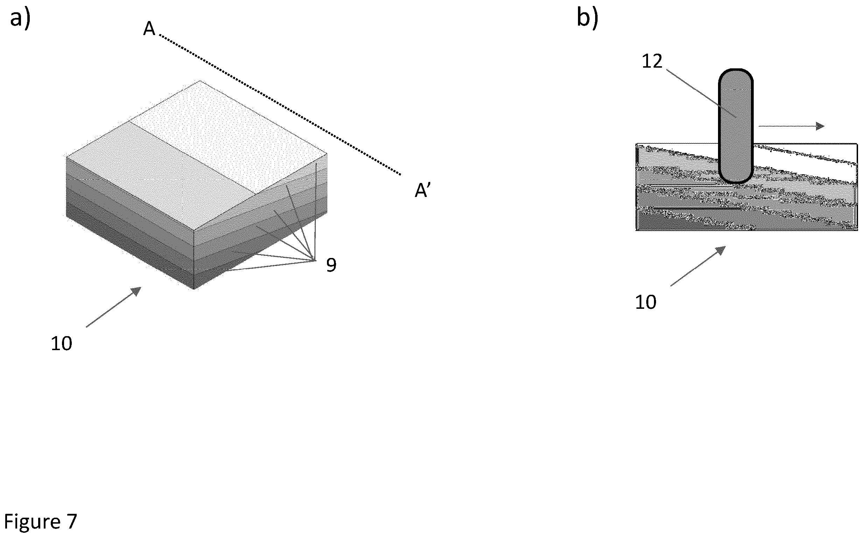

In some embodiments, the blocks with depth-variation may have inclined stratified layers oriented towards the centreline of the arrestor-bed. That is, the stratified layers are inclined such that they slope down towards the centreline by having the stratified layers 9 of the prefabricated blocks 10 inclined such that the stratified layers 9 are substantially parallel (i.e. horizontal) with the longitudinal centre axis in the longitudinal direction of the arrestor-bed and slope downwards in lateral direction towards the longitudinal centre axis of the arrestor-bed. Figure 7a) is a perspective drawing seen from the side and from the above of a single block 10 having six layers 9 of compactible energy absorbing material with gradually weaker compressive strength toward the top. As seen on the figure, each stratified layer is somewhat tilted towards the centreline shown as a stapled line marked with A and A'. Figure 7b) illustrates the same block as in figure 7a), but now seen from the side of a front side surface. A wheel 12 entering the block 10 and running in longitudinal direction will be in contact with relatively more of the weak compactible energy absorbing material on its right side (relative to the direction of travel) and thus be subject to a lateral force towards the centreline, as indicated by the black arrow on the figure.

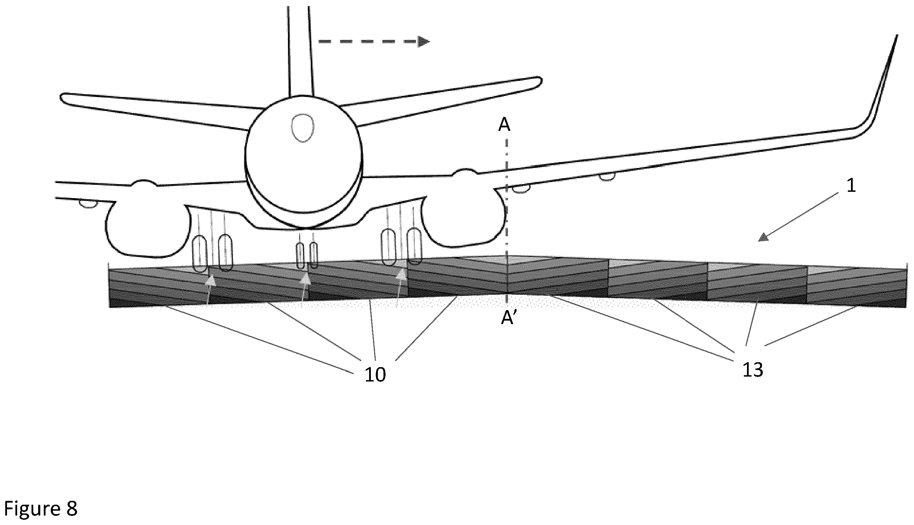

An example embodiment of an arrestor-bed assembled by blocks with depth-variation and inclined stratified layers is shown in figure 8. In this example embodiment, the arrestor-bed 1 comprises eight blocks with depth-variation and inclined stratified layers in each row (lateral direction), four blocks 10 on the left side and four blocks 13 on the right side of the centreline A-A'. The inclination of the layers of the blocks 10 on the left side of the centreline makes the stratified layers tilt downwards to their right side, while the inclination of the layers of the blocks 13 on the right side of the centreline makes the stratified layers tilt downwards to their left side. An aircraft entering the arrestor-bed out of line, e.g. to the left side of the arrestor bed as shown in this example, will be subject to a lateral force seeking to guide the aircraft to be aligned over the centreline. This effect comes in addition to the directing effect of the set of linear stripes/zones having a compressive strength lower than the bulk compressive strength according to the invention.

In some embodiments, the prefabricated blocks may comprise one or more linear throughgoing voids, channels or holes arranged normal to the lateral side of the blocks such that the throughgoing voids, channels or holes of successive blocks in each linear lane aligns and forms throughgoing voids, channels or holes extending through the entire linear lane of blocks. These throughgoing voids, channels or holes in the linear lanes form linear zones in the arrestor-bed having a compressive strength lower than the bulk compressive strength of the arrestor-bed will, since they are oriented with the same angle towards the centre axis as the inclination angle of the linear lanes of blocks, enhance the centralising effect assisting the vehicle/aircraft to pass through the arrestor-bed in parallel and along the longitudinal centre axis of the arrestor-bed formed by the relative weak joining along the side walls of the prefabricated blocks.

### List of figures

Figure 1 is a facsimile from Wikipedia showing a photograph of an aircraft wheel having entered an EMAS bed and forced to stop, https://en.wikipedia.org/wiki/Engineered_materials_arrestor_system.
Figure 2 is a diagram showing a typical compression stress-strain curve for a compactible foam material.
Figures 3a) and 3b) are drawings schematically illustrating the penetration depth of a heavy wheel (figure 3a)) and a lighter wheel (figure 3b)) entering an arrestor-bed having a stratified structure of a multiple of layers of compactible foam material with low compressive strength of the top layer and increasingly stronger compactible foam materials in the layer below.
Figures 4a) and 4b) are drawings schematically illustrating an example embodiment of a block type arrestor-bed and a monolith type arrestor-bed, respectively.
Figure 5 is a drawing schematically illustrating an example embodiment as seen from above of an arrestor-bed according to the invention with angled lanes of prefabricated blocks.
Figures 6a) and 6b) are drawings illustrating an example embodiment of the prefabricated blocks having interlocking geometric figures.
Figures 7a) and 7b) are drawings illustrating an example embodiment of a prefabricated block with a stratified structure with depth-variation and inclined strata.
Figure 8 is a drawing illustrating an arrestor-bed assembled by the blocks shown in figures 7a) and 7b).
Figure 9 is a diagram showing calculated lateral force on a B737 main gear wheel entering into an inclined bed of foam glass at different inclination angles.

### Example embodiment of the invention

The invention is described in further detail by way of an example embodiment of an arrestor-bed intended to arrest aircrafts entering the bed.

The example embodiment of the arrestor-bed is assembled by prefabricated blocks of foamed glass having a compression strength of 344.7 kPa (50 psi) assembled to form linear lanes of prefabricated blocks angled at 15 ° towards the longitudinal centre axis of the arrestor-bed. The linear lanes form a pattern similar to the example embodiment illustrated in figure 5.

The dimensions of the prefabricated blocks in the bulk part of the linear lanes had a length and width of 2.13 m and a height of 76 cm. The prefabricated blocks lying at the margins of the arrestor bed and adjacent, on both the left and right side, to the longitudinal centre axis was fit to shape to make a continuous rectangular arrestor-bed having a width of 49 m and a length of 98 m. The arrestor-bed covers i.e. a surface area comparable to a small football field.

The longitudinal side surfaces between adjacent linear lanes of blocks in the arrestor-bed form a set of angled zones of relative weak compression strength as compared to compression strength of the blocks. This creates a directional centering force. In automobiles this type of force can be observed by rutting in the road surface, in which contexts it is referred to as tramlining.

The effective lateral loading of crushable foam on an aircraft tire will be dependent upon the angle of obliquity of the tire to the channels or lanes of material. The total lateral and longitudinal forces *(Fx* and *Fy,* respectively) can be calculated by integrating the force components around the perimeter of the tire that is in contact with the crushable foam. As the path of the tire travel becomes more perpendicular to the boundary surface of the foam layer, the average lateral force will decline toward zero. Similarly, once the tire fully crosses the boundary of the crushable foam layer, the lateral force equilibrates, and the net force will decline toward zero.

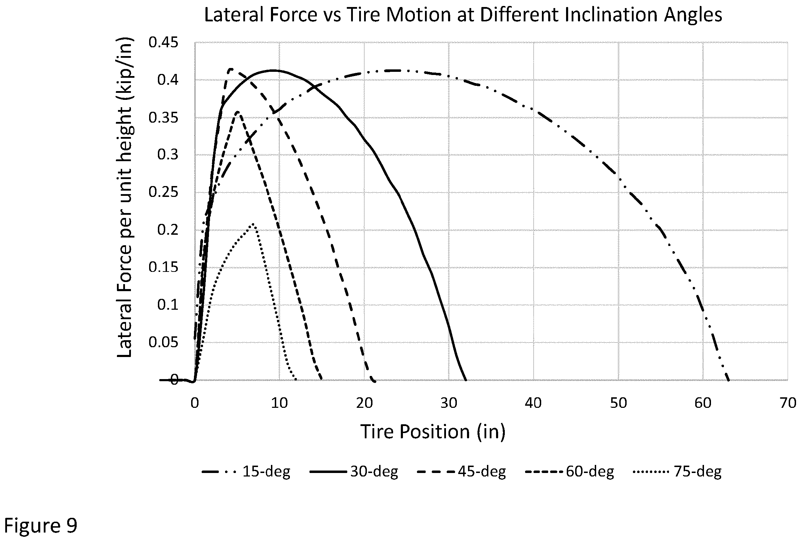

As an example, the lateral force on the main gear tire of a B737 entering into a linear lane of blocks at different angles are calculated for multiple inclination angles of 15, 30, 45, 60, and 75 ° and presented in figure 9. The main gear of the B737, which has a rated load of 199 kN (44 700 lbf) has a diameter of 113 cm (44.5 inches) and a width of 42 cm (16.5 inches). The layup scenario was simplified to include a single exposed face of crushable foam adjacent to a void space. The directional loads were calculated by integration along the arclength of tire in contact with the crushable foam. This calculation was performed at a series of positions as the tire progressively entered the crushable foam by movement in the direction of travel.

As seen from figure 9, the lateral force in this example reaches the highest magnitude and is sustained for the longest length of travel at a shallow 15-degree angle of obliquity. The lateral loads become weaker and briefer when the material is more perpendicular to the direction of travel at obliquity angles greater than 45 degrees.

In the case of the tire engaging the foam material with a 15-degree angle of obliquity and an effective engagement depth of two-thirds the rolling radius, or 2/3 x 18.5 inches= 12.4 inches (31,5 cm). Referring to the IS-degree curve in figure 9, the peak lateral force is 0.42 kip or 420 lbf per inch of material depth (735 N/cm). The total lateral force would therefore be Fx = 420 lbf/in x 12.4 in= 5,200 lbf (23.1 kN). Dividing this peak load by the tire rated vertical load yields 5,200 lbf / 44,700 lbf = 11.6%. This level of loading is significant and would act on all aircraft tires, yielding an effective centering force on the aircraft of approximately 11.6% of the aircraft weight. As indicated by the plot, this loading would rise and decline over a long transit distance of approximately 60 inches (152 cm).

### References

1. Matt Barsotti et al. (2009), "ACRP Report 29: Developing Improved Civil Aircraft Arresting Systems" US Transportation Research Board, DOI:10.17226/14340

## Claims

1. A vehicle arresting system comprising an arrestor-bed (1) laid onto a base/ground and having longitudinal centre axis extending from a front end, the front end being a side of the arrestor-bed (1) at which a vehicle is expected to enter the arrestor-bed (1), to a back end opposite the front end, wherein the arrestor-bed comprises:
a plurality of prefabricated blocks (10) of a compactible foam material assembled and adhered together side-by-side, wherein
the assembly of prefabricated blocks comprises an even numbered set of linear lanes (11) of prefabricated blocks (10), half of the set is located on a left side and half of the set is located on a right side of the longitudinal centre axis of the arrestor-bed,
**characterised in that**
each linear line (11) of prefabricated blocks (10) is angled with an angle α, where 0° < α ≤ 30°, towards the longitudinal centre axis of the arrestor-bed (1) such that the set of linear lanes (11), as seen from above, forms a series of consecutive inverted V-patterns along the longitudinal centre axis of the arrestor-bed, and
the prefabricated blocks (10) are shaped and dimensioned such that they totally cover/tesselate a surface area of the base/ground on which the arrestor-bed is laid onto.

2. The vehicle arresting system according to claim 1, wherein the set of linear lines of relatively low compressive strength is angled with an angle α, where 0° < α ≤ 28°, preferably 1° ≤ α ≤ 25°, more preferably 2° ≤ α ≤ 23°, more preferably 3° ≤ α ≤ 20°, more preferably 4° ≤ α ≤ 15°, more preferably 5° ≤ α ≤ 15°, and most preferably 5° ≤ α ≤ 10°.

3. The vehicle arresting system according to claim 1 or 2, wherein the compactible foam material is a material chosen cellular cement, cellular cementitious material, foam cement, polymeric foam, honeycomb, metal honeycomb, vermiculite, perlite, ceramics, foam glass and other isotropic or anisotropic compactible/deformable materials, or combinations thereof.

4. The vehicle arresting system according to any preceding claim, wherein the compressive strength of the compactible foam material may advantageously be in the range from 6.9 to 689.8 kPa (1 to 100 psi), preferably from 68.9 to 620.5 kPa (10 to 90 psi), more preferably from 137.9 to 551.8 kPa (20 to 80 psi), more preferably from 206.8 to 482.6 kPa (30 to 70 psi), and most preferably from 275.8 to 413.7 kPa (40 to 60 psi).

5. The vehicle arresting system according to any preceding claim, wherein the arrestor-bed has a depth-variation in the compressive strength with increasing compressive strength with increased depth of the bed obtained by providing the arrestor-bed with a stratified structure of a multiple of layers of compactible foam material having higher compressive strength for each consecutive layer of compactible foam material down to the bottom layer of the arrestor-bed.

6. The vehicle arresting system according to any preceding claim, wherein the prefabricated blocks are adhered together by gluing, caulking, or adhesive tape.

7. The vehicle arresting system according to any preceding claim, wherein the prefabricated block (10):
comprises a vertical stack of a plurality of stratified layers (9) adhered to each other and where each stratified layer (9) consists of one smaller block (7), or
comprises a vertical stack of a plurality of stratified layers (9) adhered to each other and where each stratified layer (9) consists of a second plurality of smaller blocks (8) arranged in a single horizontal plane and where the smaller blocks (8) of a stratified layer (9) are offset relative to plurality of smaller blocks (8) of the stratified layer (9) beneath and/or above it from a bottom layer to a top layer such that the smaller blocks (8) of the prefabricated block (10) form a brick pattern.

8. The vehicle arresting system according to claim 7, wherein the one or the second plurality of smaller blocks (7, 8) of the top layer (9) of the stratified prefabricated block (10) has/have a first compressive strength, the one or the second plurality of smaller blocks (7, 8) of the first stratified layer (9) below the top layer has/have a second compressive strength, the one or the second plurality of smaller blocks (7, 8) of the second stratified layer (9) below the top layer has/have a third compressive strength, and so until the bottom stratified layer (9), and where the first compressive strength< the second compressive strength< the third compressive strength and so on until the bottom stratified layer (9).

9. The vehicle arresting system according to claim 8, wherein the stratified layers (9) of the prefabricated blocks (10) are inclined such that the stratified layers (9) are substantially parallel with a longitudinal centre axis in the longitudinal direction and slope downwards in lateral direction towards the longitudinal centre axis of the arrestor-bed.

10. The vehicle arresting system according to any preceding claim, wherein the prefabricated block (10) further comprises interlocking geometric features at their edges.

11. The vehicle arresting system according to any preceding claim, wherein the prefabricated block (10) further comprises one or more linear throughgoing voids, channels or holes being oriented normal to a lateral side of the block.

## Patentansprüche

1. Fahrzeugarretiersystem umfassend ein Arretierbett (1), das auf eine Basis/einen Boden aufgelegt ist und eine Längsmittelachse aufweist, die sich von einem vorderen Ende, wobei das vordere Ende eine Seite des Arretierbetts (1) ist, bei dem Eintreten eines Fahrzeugs in das Arretierbett (1) erwartet wird, zu einem hinteren Ende gegenüber dem vorderen Ende erstreckt, wobei das Arretierbett umfasst:
eine Vielzahl von vorgefertigten Blöcke (10) aus einem kompaktierbaren Schaumstoffmaterial, die nebeneinander zusammengesetzt und aneinander befestigt sind, wobei die Anordnung von vorgefertigten Blöcken einen geradzahligen Satz von linearen Bahnen (11) von vorgefertigten Blöcken (10) umfasst, wobei der halbe Satz auf einer linken Seite und der halbe Satz auf einer rechten Seite der Längsmittelachse des Arretierbetts angeordnet ist,
**dadurch gekennzeichnet, dass** jede lineare Bahn (11) von vorgefertigten Blöcken (10) mit einem Winkel α, wobei 0° < α ≤ 30°, in Richtung zu der Längsmittelachse des Arretierbetts (1) gewinkelt ist, so dass der Satz von linearen Bahnen (11) von oben gesehen eine Reihe von aufeinanderfolgenden invertierten V-Strukturen entlang der Längsmittelachse des Arretierbetts bildet, und
die vorgefertigten Blöcke (10) so geformt und dimensioniert sind, dass sie eine Oberfläche der Basis/des Bodens, auf die/den das Arretierbett aufgelegt ist, vollständig bedecken/tesselieren.

2. Fahrzeugarretiersystem nach Anspruch 1, wobei der Satz von linearen Bahnen mit relativ niedriger Druckfestigkeit mit einem Winkel α gewinkelt ist, wobei 0° < a ≤ 28°, vorzugsweise 1° ≤ α ≤ 25°, bevorzugter 2° ≤ α ≤ 23°, bevorzugter 3° ≤ α ≤ 20°, bevorzugter 4° ≤ α ≤ 15°, bevorzugter 5° ≤ α ≤ 15° und höchst bevorzugt 5° ≤ α ≤ 10°.

3. Fahrzeugarretiersystem nach Anspruch 1 oder 2, wobei das kompaktierbare Schaumstoffmaterial ein Material ausgewählt aus Zellzement, Zellzementmaterial, Schaumzement, Polymerschaumstoff, Waben, Metallwaben, Vermikulit, Perlit, Keramik, Schaumglas und anderen isotropen oder anisotropen kompaktierbaren/verformbaren Materialien und Kombinationen davon ist.

4. Fahrzeugarretiersystem nach einem der vorstehenden Ansprüche, wobei die Druckfestigkeit des kompaktierbaren Schaumstoffmaterials vorteilhaft in dem Bereich von 6,9 bis 689,8 kPa (1 bis 100 psi), vorzugsweise von 68,9 bis 620,5 kPa (10 bis 90 psi), bevorzugter von 137,9 bis 551,8 kPa (20 bis 80 psi), bevorzugter von 206,8 bis 482,6 kPa (30 bis 70 psi) und höchst bevorzugt von 275,8 bis 413,7 kPa (40 bis 60 psi) liegen kann.

5. Fahrzeugarretiersystem nach einem der vorstehenden Ansprüche, wobei das Arretierbett eine Tiefenvariation der Druckfestigkeit mit bei zunehmender Tiefe des Betts zunehmender Druckfestigkeit aufweist, erhalten durch Versehen des Arretierbetts mit einer Schichtstruktur aus einer Mehrzahl von Lagen von kompaktierbarem Schaumstoffmaterial mit höherer Druckfestigkeit für jede aufeinanderfolgende Lage von kompaktierbarem Schaumstoffmaterial bis hinunter zu der untersten Lage des Arretierbetts.

6. Fahrzeugarretiersystem nach einem der vorstehenden Ansprüche, wobei die vorgefertigten Blöcke durch Verkleben, Verstemmen oder Klebeband aneinander befestigt sind.

7. Fahrzeugarretiersystem nach einem der vorstehenden Ansprüche, wobei der vorgefertigte Block (10):
einen vertikalen Stapel aus einer Vielzahl von aneinander befestigten Schichtlagen (9) umfasst und wobei jede Schichtlage (9) aus einem kleineren Block (7) besteht, oder
einen vertikalen Stapel aus einer Vielzahl von aneinander befestigten Schichtlagen (9) umfasst und wobei jede Schichtlage (9) aus einer zweiten Vielzahl von kleineren Blöcken (8) besteht, die in einer einzigen horizontalen Ebene angeordnet sind, und wobei die kleineren Blöcke (8) einer Schichtlage (9) gegenüber einer Vielzahl von kleineren Blöcken (8) der Schichtlage (9) darunter und/oder darüber von einer untersten Lage zu einer Decklage versetzt sind, so dass die kleineren Blöcke (8) des vorgefertigten Blocks (10) ein Backsteinmuster bilden.

8. Fahrzeugarretiersystem nach Anspruch 7, wobei die eine oder die zweite Vielzahl von kleineren Blöcken (7, 8) der Decklage (9) des vorgefertigten Schichtblocks (10) eine erste Druckfestigkeit aufweist/aufweisen, die eine oder die zweite Vielzahl von kleineren Blöcken (7, 8) der ersten Schichtlage (9) unterhalb der Decklage eine zweite Druckfestigkeit aufweist/aufweisen, die eine oder die zweite Vielzahl von kleineren Blöcken (7, 8) der zweiten Schichtlage (9) unterhalb der Decklage eine dritte Druckfestigkeit aufweist/aufweisen, und so fort bis zu der untersten Schichtlage (9), und wobei die erste Druckfestigkeit < die zweite Druckfestigkeit < die dritte Druckfestigkeit und so fort bis zur untersten Schichtlage (9).

9. Fahrzeugarretiersystem nach Anspruch 8, wobei die Schichtlagen (9) der vorgefertigten Blöcke (10) so geneigt sind, dass die Schichtlagen (9) im Wesentlichen parallel zu einer Längsmittelachse in der Längsrichtung sind und in Seitenrichtung zu der Längsmittelachse des Arretierbetts nach unten geneigt sind.

10. Fahrzeugarretiersystem nach einem der vorstehenden Ansprüche, wobei der vorgefertigte Block (10) ferner geometrische Verzahnungselemente an seinen Kanten umfasst.

11. Fahrzeugarretiersystem nach einem der vorstehenden Ansprüche, wobei der vorgefertigte Block (10) ferner einen oder mehrere lineare hindurchgehende Hohlräume, Kanäle oder Löcher umfasst, die senkrecht zu einer Seitenfläche des Blocks ausgerichtet sind.

## Revendications

1. Système d'arrêt de véhicule comprenant un lit d'arrêt (1) posé sur une base/un sol et ayant un axe central longitudinal s'étendant depuis une extrémité avant, l'extrémité avant étant un côté du lit d'arrêt (1) par lequel un véhicule est censé pénétrer dans le lit d'arrêt (1), jusqu'à une extrémité arrière à l'opposé de l'extrémité avant, dans lequel le lit d'arrêt comprend :
une pluralité de blocs préfabriqués (10) d'un matériau alvéolaire compactable que l'on a assemblés côte à côte et fait adhérer les uns aux autres, dans lequel l'ensemble de blocs préfabriqués comprend un ensemble de nombre pair de bandes linéaires (11) de blocs préfabriqués (10), la moitié de l'ensemble est située sur un côté gauche et une moitié de l'ensemble est située sur un côté droit de l'axe central longitudinal du lit d'arrêt,
**caractérisé en ce que** chaque bande linéaire (11) de blocs préfabriqués (10) est inclinée d'un angle α, où 0° < α ≤ 30°, vers l'axe central longitudinal du lit d'arrêt (1) de telle sorte que l'ensemble de bandes linéaires (11), vu de dessus, forme une série de motifs en V inversé successifs le long de l'axe central longitudinal du lit d'arrêt, et
les blocs préfabriqués (10) sont façonnés et dimensionnés de telle sorte qu'ils couvrent/pavent entièrement une aire de surface de la base/du sol sur lequel est posé le lit d'arrêt.

2. Système d'arrêt de véhicule selon la revendication 1, dans lequel l'ensemble de bandes linéaires de résistance à la compression relativement faible est incliné d'un angle α, où 0° < α ≤ 28°, de préférence 1° ≤ α ≤ 25°, mieux 2° ≤ α ≤ 23°, mieux encore 3° ≤ α ≤ 20°, mieux 4° ≤ α ≤ 15°, mieux encore 5° ≤ α ≤ 15°, et idéalement 5° ≤ α ≤ 10°.

3. Système d'arrêt de véhicule selon la revendication 1 ou 2, dans lequel le matériau alvéolaire compactable est un matériau choisi parmi le ciment cellulaire, les matériaux cimentaires cellulaires, le ciment mousse, la mousse polymère, les structures en nid d'abeilles, les structures en nid d'abeilles métalliques, la vermiculite, la perlite, les céramiques, le verre mousse et les autres matériaux compactables/déformables isotropes ou anisotropes, et les combinaisons de ceux-ci.

4. Système d'arrêt de véhicule selon une quelconque revendication précédente, dans lequel la résistance à la compression du matériau alvéolaire compactable peut avantageusement se situer dans la plage de 6,9 à 689,8 kPa (1 à 100 psi), de préférence de 68,9 à 620,5 kPa (10 à 90 psi), mieux de 137,9 à 551,8 kPa (20 à 80 psi), mieux encore de 206,8 à 482,6 kPa (30 à 70 psi), et idéalement de 275,8 à 413,7 kPa (40 à 60 psi).

5. Système d'arrêt de véhicule selon une quelconque revendication précédente, dans lequel le lit d'arrêt présente une variation sur la profondeur de la résistance à la compression avec une résistance à la compression croissante avec une plus grande profondeur du lit obtenue en dotant le lit d'arrêt d'une structure stratifiée de multiples couches de matériau alvéolaire compactable ayant une plus forte résistance à la compression pour chaque couche successive de matériau alvéolaire compactable en descendant jusqu'à la couche inférieure du lit d'arrêt.

6. Système d'arrêt de véhicule selon une quelconque revendication précédente, dans lequel on a fait adhérer les blocs préfabriqués les uns aux autres par collage, masticage, ou avec du ruban adhésif.

7. Système d'arrêt de véhicule selon une quelconque revendication précédente, dans lequel le bloc préfabriqué (10) :
comprend un empilement vertical d'une pluralité de couches stratifiées (9) adhérant les unes aux autres et où chaque couche stratifiée (9) consiste en un bloc plus petit (7), ou
comprend un empilement vertical d'une pluralité de couches stratifiées (9) adhérant les unes aux autres et où chaque couche stratifiée (9) consiste en une deuxième pluralité de blocs plus petits (8) disposés dans un seul plan horizontal et où les blocs plus petits (8) d'une couche stratifiée (9) sont décalés par rapport à la pluralité de blocs plus petits (8) de la couche stratifiée (9) en dessous et/ou au-dessus de celle-ci depuis une couche inférieure jusqu'à une couche supérieure de telle sorte que les blocs plus petits (8) du bloc préfabriqué (10) forment un motif de briques.

8. Système d'arrêt de véhicule selon la revendication 7, dans lequel le bloc plus petit ou la deuxième pluralité de blocs plus petits (7, 8) de la couche supérieure (9) du bloc préfabriqué stratifié (10) a/ont une première résistance à la compression, le bloc plus petit ou la deuxième pluralité de blocs plus petits (7, 8) de la première couche stratifiée (9) en dessous de la couche supérieure a/ont une deuxième résistance à la compression, le bloc plus petit ou la deuxième pluralité de blocs plus petits (7, 8) de la deuxième couche stratifiée (9) en dessous de la couche supérieure a/ont une troisième résistance à la compression, et ainsi de suite jusqu'à la couche stratifiée inférieure (9), et dans lequel la première résistance à la compression < la deuxième résistance à la compression < la troisième résistance à la compression, et ainsi de suite jusqu'à la couche stratifiée inférieure (9).

9. Système d'arrêt de véhicule selon la revendication 8, dans lequel les couches stratifiées (9) des blocs préfabriqués (10) sont inclinées de telle sorte que les couches stratifiées (9) sont sensiblement parallèles à un axe central longitudinal dans la direction longitudinale et suivent une pente descendante dans une direction latérale vers l'axe central longitudinal du lit d'arrêt.

10. Système d'arrêt de véhicule selon une quelconque revendication précédente, dans lequel le bloc préfabriqué (10) comprend en outre des éléments géométriques d'emboîtement sur ses bords.

11. Système d'arrêt de véhicule selon une quelconque revendication précédente, dans lequel le bloc préfabriqué (10) comprend en outre un ou plusieurs vides, canaux ou trous traversants linéaires orientés perpendiculairement à un côté latéral du bloc.
